# EUROPEAN PATENT SPECIFICATION

(11) **EP 0 500 140 B1**
(45) Date of publication and mention of the grant of the patent: **28.05.1997**
(21) Application number: 92103101.9
(22) Date of filing: 24.02.1992
(51) Int. Cl.: B62K 11/00, B62M 7/00

(54) **Motorcycle**
Motorrad
Motocyclette

(30) Priority: 22.02.1991 JP 50411/91
(43) Date of publication of application: 26.08.1992
(73) Proprietor: YAMAHA HATSUDOKI KABUSHIKI KAISHA, Iwata-shi Shizuoka-ken, 438 (JP)
(72) Inventor: Nakamura, Kimiaki, c/o Yamaha Hatsudoki K.K., Iwata-shi, Shizuoka-ken 438 (JP); Takegami, Masaki, c/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- US-A- 4 478 306
- PATENT ABSTRACTS OF JAPAN vol. 6, no. 134 (M-144)(1012) 21 July 1982
- PATENT ABSTRACTS OF JAPAN vol. 7, no. 187 (M-236)(1332) 16 August 1983
- PATENT ABSTRACTS OF JAPAN vol. 8, no. 274 (M-345)(1711) 14 December 1984
- PATENT ABSTRACTS OF JAPAN vol. 7, no. 141 (M-223)(1286) 21 June 1983
- PATENT ABSTRACTS OF JAPAN vol. 14, no. 473 (M-1035)(4416) 16 October 1990

## Description

The present invention relates to a motorcycle comprising a steering shaft for steering a front wheel and a water-cooled internal-combustion engine, in particular a water-cooled four-cycle multi-cylinder engine, the coolant arrangement thereof including a radiator assembly which is disposed at a level substantially above the front wheel, said radiator assembly being communicated to a coolant jacket arrangement of the engine, and comprising a radiator element extending inclined rearwardly substantially in parallel to the steering shaft.

The water-cooled engine is more and more widely in use on motorcycles recently, and the radiator for cooling the cooling water of such an engine by travelling wind or the like must be positioned so that it may receive sufficient travelling wind and requires a large disposing space because it is a relatively bulky member. A radiator disposing structure for a motorcycle has been disclosed in Japanese unexamined patent publication Sho56-113042 in which the radiator is disposed behind and under the steering shaft, namely behind the front wheel, with a forward inclination so that its upper portion may be positioned forward of the lower portion.

However, in the case of the conventional radiator disposing structure described above, since the radiator is positioned lower than the steering shaft, the radiator will be disposed as rearward as possible with a forward inclination to avoid interference with the front wheel. Consequently, since the cylinder body, cylinder head, etc., will be positioned just behind the radiator, the radiator is apt to be affected by the heat of the engine. Further, since travelling wind is intercepted by the front wheel, there occurs a problem that sufficient travelling wind will not reach the radiator and therefore the cooling efficiency cannot be improved so much.

A motorcycle as indicated above is known from US-A-4 478 306. Further improvement of the cooling structure of such a motorcycle is desirable.

Accordingly, it is an object of the present invention to provide a motorcycle having a radiator disposing structure which enables the cooling efficiency to be improved while simultaneously effectively utilising the dead space in the base frame structure of the motorcycle.

In order to perform this objective, the present innovation provides a motorcycle as indicated in the introductory portion of the description wherein said radiator element having a single centre portion which is disposed directly behind the steering shaft.

According to the preferred embodiment of the present invention the radiator assembly comprises at least one radiator extending along a portion behind the steering shaft, said radiator being disposed inclined rearwardly in a manner to comprise a front top portion and a rear top portion such that the rear top portion is disposed at a spot behind the front bottom portion in the travelling direction of the motorcycle, i.e. the radiator of the radiator assembly is disposed behind the steering shaft with a rearward inclination in side view.

Accordingly, it is preferred that an upper portion of the radiator is positioned rearward of its lower portion increasing the accessibility of cooling air to the radiator assembly.

According to another preferred embodiment of the present invention the cooling efficiency can be further improved and the available space can be effectively used by means of disposing a pair of left and right blower fans behind the radiator, said fans being disposed offset downwardly and laterally to the outside left and right lower corner portions of the radiator.

With a motorcycle having a radiator dispersing structure according to the present invention, the cooling efficiency can be considerably improved as the cooling travelling wind flowing above the front wheel is introduced into the radiator without being intercepted by the front wheel, resulting from the disposal of the radiator behind the steering shaft i.e. above the front wheel. Moreover, since the front wheel is disposed behind the rearwardly inclining steering shaft with a rearward inclination similar to that of the steering shaft either the space behind the steering shaft can be effectively utilized as the radiator is disposed to extend substantially along the steering shaft in side view.

In the following the present invention is explained in greater detail by means of preferred embodiments thereof in conjunction with the accompanying drawings, wherein:
Figure 1 is a side view of a motorcycle according to the present invention equipped with a new radiator arrangement,
Figure 2 is a planned view of figure 1,
Figure 3 is another planned view of the cooling arrangement of the motorcycle according to the present invention,
Figure 4 is a sectional side view of the cooling arrangement of the motorcycle according to the present invention sharing the structure around the engine,
Figure 5 is a typical illustration showing the radiator arrangement and piping in the case where two sets of top and bottom radiators are provided through a motorcycle according to the present invention and
Figure 6 is a typical illustration showing the conventional radiator arrangement and piping in the case where two sets of radiators are used.

An embodiment of this invention is described hereafter referring to the appended drawings.

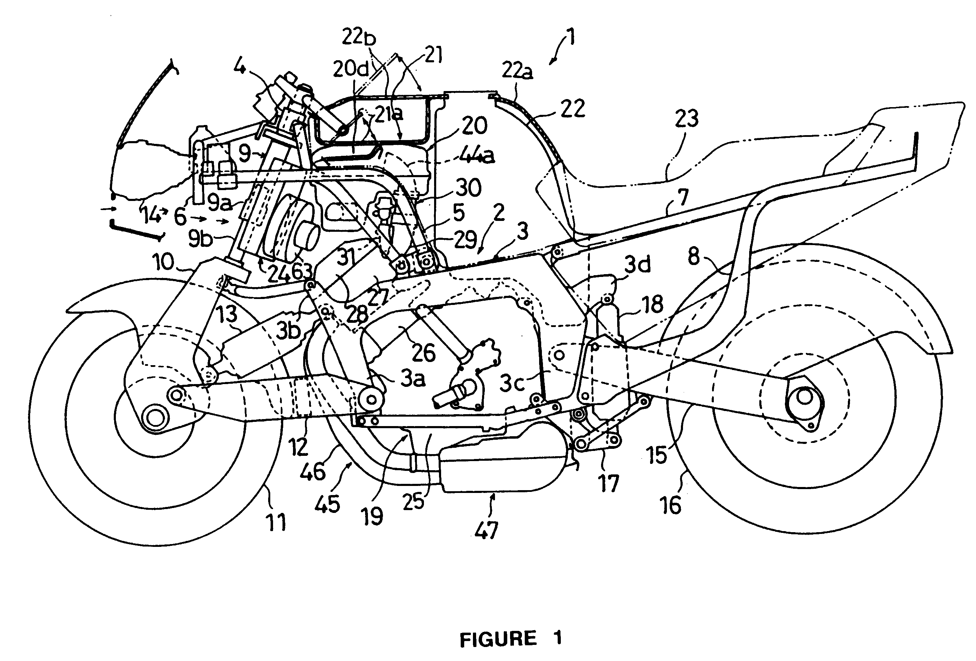

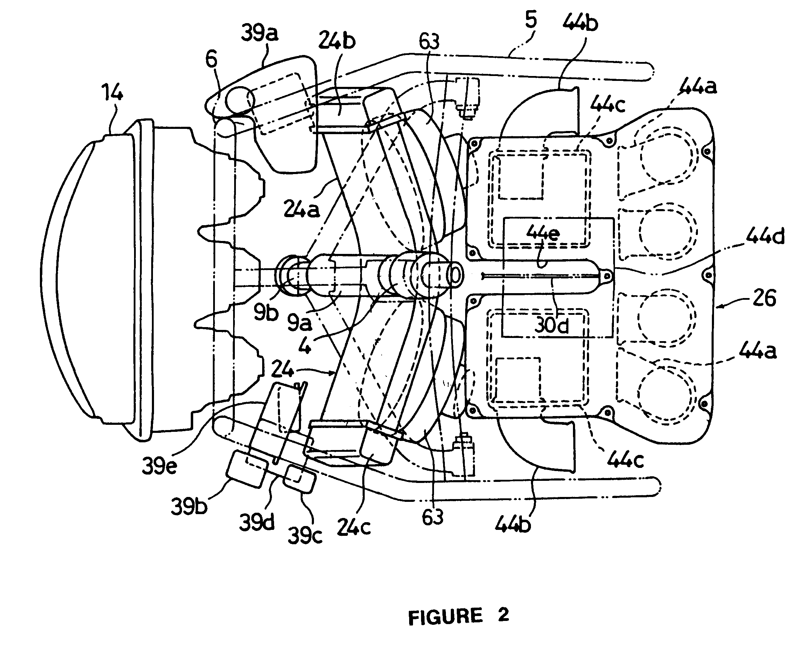

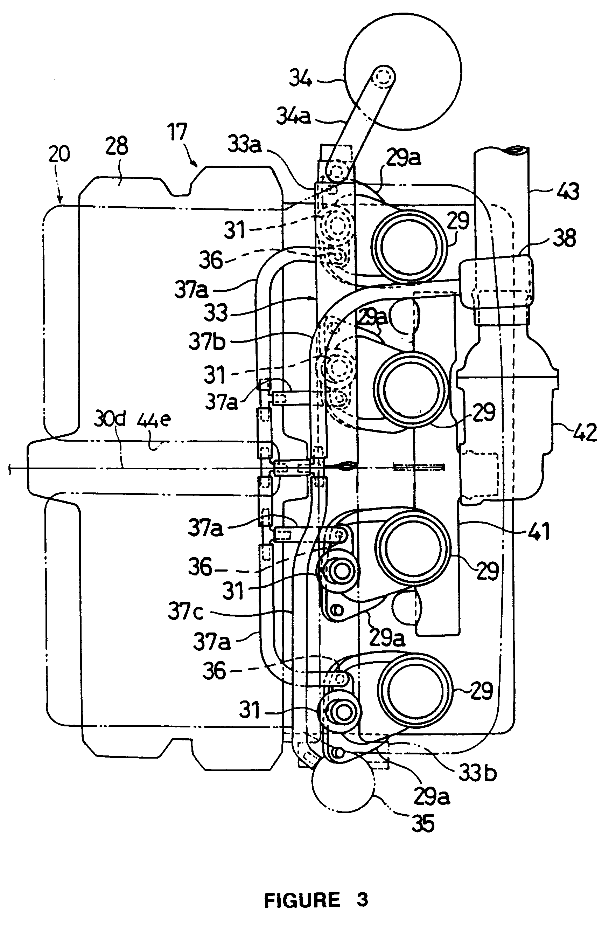

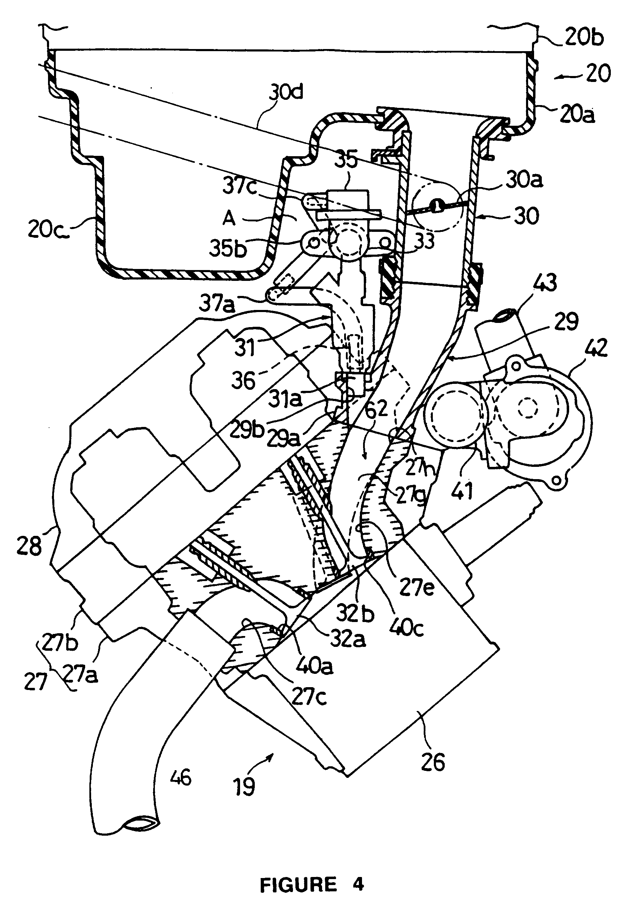

Among the drawings Figs. 1 through 4 for describing the radiator disposing structure for a motorcycle according to an embodiment of this invention, Fig. 1 is a side view of a motorcycle incorporated with the embodiment structure above, Figs. 2 and 3 are plan views of the embodiment structure above, and Fig. 4 is a sectional side view showing the cooling water outlet portion of the engine.

In the drawings, the reference numeral 1 denotes a motorcycle having this embodiment engine mounted, and its body frame 2 is constructed by connecting a pair of left and right main frames 3 generally inverse-U-shaped in their side view with each other through a cross pipe, supporting a head pipe 4 through a head bracket 5 connected to the upper surface of the upper side of the main frame 3, providing a lamp stay 6 for supporting the head lamp 14 on the forward extension of the head bracket 5, connecting a seat rail 7 to the rear end of the upper side of the main frame 3, and connecting the seat rail 7 with the rear arm bracket portion 3c (the rear side of the main frame 3) through a seat stay 8.

On the lower end of the front bracket portion 3a which is the front side of the main frame 3, a front arm 12 is supported for swinging vertically. This front arm 12 is formed generally in h shape in its plan view, the rear end portion of the arm 12 is supported for swinging on the front bracket portion 3a, and to its front end is connected, through a ball joint (not shown), a front wheel bracket 10 for supporting the front wheel 11 for rotation at its lower end. The lower portion of the front wheel bracket 10 and the upper end of the front bracket 3a are connected with each other through a front cushion 13, and further the front wheel bracket 10 is supported for steering leftward and rightward through a steering shaft 9 by the head pipe 4. This steering shaft 9 is composed of an upper pipe 9a supported for rotation by the head pipe 4 and a lower pipe 9b inserted in the upper pipe 9 for sliding axially and fixed on the upper end of the front wheel bracket 10, and is disposed so that its upper portion may be positioned rearward of its lower portion, namely with a rearward inclination.

On the rear arm bracket portion 3c of the main frame 3 is supported for swinging vertically a rear arm 15 which supports the rear wheel 16 with its rear end. The front portion of the rear arm 15 is connected with the lower end portion of the rear arm bracket portion 3c through a link mechanism 17, and the link mechanism 17 is connected with the cushion bracket 3d of the rear arm bracket 3c through a rear cushion 18.

The engine unit 19 is suspended by the main frame 3. Above the front portion of the engine 19 are mounted an air cleaner 20 and a glove box 21 in this order from bottom, above the rear portion of the engine unit 19 is mounted a fuel tank 22, and a seat 23 is disposed behind the fuel tank 22. The glove box 21, fuel tank 22, etc., are surrounded with a tank cover 22a having a lid portion 22a formed at a glove box portion, and another lid 21a is formed at the bottom of the glove box 21.

The engine unit 19 is of a water-cooled 4-cycle parallel 4-cylinder type and is constructed by stacking and fastening a cylinder body 26, a cylinder head 27 and a head cover 28 on the upper front portion of the crankcase 25. The cylinder head 27 is of a bisectional structure composed of a lower head 27a and an upper head 27b. On the exhaust valve openings 40a and 40a and intake valve openings 40b, 40c and 40d are disposed exhaust valves 32a and intake valves 32b, respectively. The exhaust valve openings 40a and 40a are led out of the cylinder front wall through an exhaust passage 27c and the intake valve openings 40b, 40c and 40d are led out of the cylinder rear wall through an intake passage 62.

To the outer connecting port of the exhaust passage 27c is connected an exhaust pipe 46 of the exhaust system 45, and the exhaust pipe 46, four in all, extends downward from the front of the crankcase 25 and is connected to a single large chamber 47 disposed under the crankcase 25.

To the outer connecting port 27h of the intake passage 62 is connected an intake manifold 29, to the upper end of which is connected, generally vertically as a whole, a throttle body 30 incorporated with a throttle valve 30a, and the air cleaner 20 is connected to the throttle body 30.

The air cleaner 20 has a construction in which its top-and-bottom bisectional cleaner case composed of a top and a bottom case 20a and 20b has a slit-like escape portion 44e formed at its front center, a pair of left and right cleaner elements 44c are disposed in each of the cleaner case portion partitioned by the escape portion 44e, and an outer air introducing duct 44b is inserted in and connected to each element 44c. The bottom case 20a has element accomodating chambers 20c formed by swelling its front bottom portion downward, and the top case 20b has an accomodating cavity 20d formed downward on its front ceiling portion. Between the accomodating cavity 20d and the glove box 21 is disposed a control box 44d for controlling the engine. The reference numeral 44a denotes an intake funnel connected to the throttle body 30 and directed to the element 44c portion.

On the front side of the intake manifold 29, namely in the space A surrounded, as viewed sideways, by the intake manifold 29, throttle body 30, downware swelling 20c of the air cleaner 20, and upper head 27b and head cover 28 of the engine unit 19, is mounted a fuel injection valve 31 generally vertically, and its injection nozzle 31a is inserted in the valve hole 29b formed in the vicinity of the lower end flange portion 29a of the intake manifold 29.

The upper end portion of the fuel injection valve 31 is inserted in and connected to the fuel rail 33 for fuel supply, and this fuel rail 33 is disposed in parallel to the camshaft. To the right end 33a of the fuel rail 33 is connected a fuel filter 34 through a supply hose 34a which is in turn connected to a fuel pump (not shown). The fuel pump is disposed in a downward swelling 22a formed at the rear portion of the fuel tank 22 and positioned between the left and right rear arm bracket portions 3c of the left and right main frames 3. To the flange portion 33b at the left end of the fuel rail 33 is connected a regulator 35 for controlling the fuel pressure to a predetermined value.

On the portion of the lower end flange portion 29a of each intake manifold 29 adjacent to the valve hole 29b is disposed a negative pressure detecting nozzle 36. These detecting nozzles, four in all, are joined and communicated with one another through pressure leading tubes 37a, and to one end of the junction portion is connected an hydraulic pressure detecting sensor 38 through a pressure leading tube 37b. The other end of the junction portion is connected to the regulator 35 through a pressure leading tube 37c. Although not shown here, each pressure leading tube 37a has a throttling formed at every portion connected to the negative pressure detecting nozzle 36 so that the interference of the intake negative pressures between cylinders may be avoided.

A radiator 24 is disposed behind the steering shaft 9, and the radiator 24 is inclined rearward along the steering shaft 9 as viewed sideways. This radiator 24 is constructed by fixing a water feed box 24b and a water discharge box 24c on the right and left ends, respectively, of the element 24a curved so as to convex rearward, and a pair of left and right blower fans 63 and 63 are disposed behind the radiator 24 each with a displacement toward the outside lower corner. The water discharge box 24c is connected to the suction port of the cooling water pump 43 disposed on the left side of the crankcase 25 through a return hose 43a. The delivery port of the cooling water pump 43 is connected to the cooling jacket of the cylinder body 26 through a feeding hose 43b. This cooling jacket is communicated with the cooling jacket of the cylinder head 27, and the water discharge common pipe 41 connected to the outlets of the cylinder head 27 cooling jackets is in turn connected to the water feeding box 24b of the radiator 24 through a thermostat valve 42 and a return hose 43c.

Further, around the radiator 24 are disposed various members such as a cooling water recovery tank 39a, relays 39b and 39c, ignition coil 39d, fuse box 39e and so on, and these are supported on the lamp stay 6. These members above, head lamp 14, and the steering shaft 9 are surrounded with a cowling 65. The cowling 65 has an air intake port 65a formed through its portion lower than the head lamp 14, and the air intake port 65a is positioned forward of the radiator 24.

The function and effect of this embodiment is described next.

With this embodiment system, the cooling water delivered by the cooling water pump 43 is heated while cooling the cooling jacket portions of the cylinder body 26 and cylinder head 27, is supplied to the radiator 24 through the thermostat valve 42, cooled by the travelling wind while flowing horizontally through the element 24a portion, and returns to the cooling water pump 43.

In this embodiment, since the radiator 24 is disposed behind the steering shaft 9, it will be positioned above the front wheel 11, and, since the cowling 65 has an air intake port 65a formed through its portion forward of the radiator 24, sufficient travelling wind is supplied to the radiator 24 without being intercepted by the front wheel 11, and therefore the cooling efficiency is improved as much. Further, in the case where various components are disposed within the cowling 65, since a space is formed at the middle, namely in front of the radiator 24, by putting them aside leftward or rightward, the flow of the travelling wind becomes better from this point of view also, which contributes to the improvement of the cooling efficiency.

Further, since the radiator 24 is disposed behind the steering shaft 9 disposed with a rearward inclination with a similar rearward inclination, the space behind the steering shaft can be effectively utilized. In this case, since the motor fans 66 disposed on the rear face of the radiator 24 are displaced toward the outside lower corners of the radiator 24, the capacity of the air cleaner 20 disposed behind the radiator will not be sacrificed.

Further, since the radiator 24 is disposed behind the steering shaft 9, namely above the head cover 28, it is not necessary to consider the interference between the engine top and the radiator 24, and therefore the angle of engine inclination can be set arbitrarily.

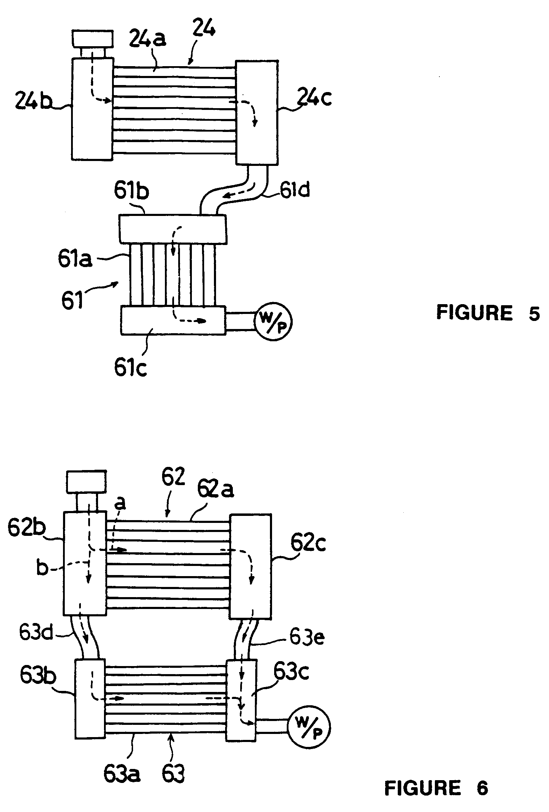

Although the above embodiment is provided with a set of radiator 24, another radiator may be provided under the radiator 24 to increase the heat radiating area, and an example of a conventional arrangement of two sets of top and bottom radiators is shown in Fig. 6.

In Fig. 6, the reference numerals 62 and 63 denote a top radiator and a bottom radiator constructed by providing the element 62a or 63a with a water feeding box 62b or 63b at one end and a water discharging box 62c or 63c at the other end, respectively. In this case, the water feeding boxes 62b and 63b are connected with each other through a hose 63d, while the water discharge boxes 62c and 63c are connected with each other through a hose 63e. In these conventional radiators 62 and 63, the cooling water flows horizontally, and these radiators 62 and 63 are in the so-called parallel connection state.

However, with the conventional arrangement shown in Fig. 6, the cooling water is divided into **a** and **b** in the water feeding box 62b, then one of them **a** is discharged after flowing only through the top radiator 62 while the other of them **b** is discharged after flowing only through the bottom radiator 63, which means that the substantial heat radiating area has not increased although two sets of radiators are provided. Also, there is a problem that the piping is complicated because two radiators are connected through two hoses 63d and 63e.

Fig. 5 shows a radiator arrangement structure with which the problem of the arrangement shown in Fig. 6 can be eliminated. In Fig. 5, the reference numerals 24 and 61 denote a top radiator and a bottom radiator each having a water feeding box 24b or 61b and a water discharging box 24c or 61c connected to one end and the other end of their elements 24b and 61b, respectively, Further, the water discharging box 24c of the top radiator 24 is connected to the water feeding box 61b of the bottom radiator 61 through a hose 61d. That is, the cooling water flows horizontally in the top radiator 24 and vertically in the bottom radiator 61, and these radiators 24 and 61 are in the state of so-called serial connection.

In the case of the radiator arrangement structure shown in Fig. 5, the cooling water will flow all through the top and bottom radiators 24 and 61 in serial order without branching and therefore the heat radiating area will increase substantially. Further, since only one connecting hose is sufficient between both radiators, the piping therefore will not be complicated.

With the motorcycle radiator disposing structure according to this invention, since the radiator is disposed behind the steering shaft inclined rearward as viewed sideways with a similar rearward inclination, effects are obtained that the cooling effect can be improved by sufficiently introducing travelling wind, and that the space behind the steering shaft can be effectively utilized.

## Claims

1. Motorcycle comprising a steering shaft (9) for steering a front wheel (11), and a water cooled internal combustion engine, the cooling arrangement thereof comprising a radiator assembly (24) which is disposed at a level substantially above the front wheel (11), said radiator assembly (24) being communicated to a coolant jacket arrangement of the engine and comprising a radiator element (24a) extending inclined rearwardly substantially in parallel to the steering shaft (9), characterized in that the radiator element (24a) has a single center portion which is disposed directly behind the steering shaft (9).

2. Motorcycle as claimed in claim 1, **characterized in that** the radiator assembly comprises at least one radiator (24) having said radiator element (24a) extending inclined rearwardly in a manner to comprise a front bottom portion and a rear top portion.

3. Motorcycle as claimed in claim 2, **characterized in that** the radiator (24) comprises left and right water boxes (24b, 24c) connected to each other by said radiator element (24a) which is curved.

4. Motorcycle as claimed in at least one of the preceding claims 1 to 3, **characterized in that** the radiator assembly comprises a top radiator (24) and a bottom radiator (61) disclosed in series, each having a water feeding box (24b, 61b) and a water discharge box (24c, 61c) connected to the inlet and outlet sides of each of the radiator elements (24b, 61b) wherein the water feeding box (24c, 61c) of the bottom radiator (62) is connected to the water discharge box (24c) of the top radiator (24).

5. Motorcycle as claimed in claim 4, **characterized in that** the water discharge box (24c, 61c) is connected to a suction port of the coolant water pump (43) through a return hose (42a) while a delivery port of the coolant water pump (43) is connected to the coolant jacket of the cylinder body (26) of the engine, said coolant jacket being communicated to the coolant jacket arrangement of the cylinder head (27) and that a connector water discharge pipe (41) is provided to communicate the water coolant arrangement of the cylinder head (27) to the water feeding box (24b) of the radiator (24) through a thermostat valve (42) and a return hose (43c).

6. Motorcycle as claimed in claim 3, **characterized in that** the radiator element (24a) is curved concave forwardly with the steering shaft (9) extending adjacent crosswise in front of the center portion of the radiator element (24a).

7. Motorcycle as claimed in at least one of the preceding claims 1 to 6, **characterized in that** a pair of left and right blower fans (63) is disposed behind the radiator (24), said fans (63) being disposed offset downwardly and laterally to the outside left and right lower corner portions of the radiator (24).

## Patentansprüche

1. Motorrad mit einer Lenksäule (9) zum Lenken eines Vorderrades (11) und einer wassergekühlten Brennkraftmaschine, deren Kühlanordnung aufweist eine Kühleranordnung (24), die auf einem Niveau im wesentlichen über dem Vorderrad (11) angeordnet ist, wobei die Kühleranordnung (24) mit einer Kühlmittelmantelanordnung des Motors verbunden ist und ein Kühlerelement (24a) aufweist, das sich nach rückwärts geneigt im wesentlichen parallel zu der Lenksäule (9) erstreckt, **dadurch gekennzeichnet**, daß das Kühlerelement (24a) einen einzigen Mittelabschnitt aufweist, der direkt hinter der Lenksäule (9) angeordnet ist.

2. Motorrad nach Anspruch 1, **dadurch gekennzeichnet**, daß die Kühleranordnung zumindest einen Kühler (24) aufweist, der das Kühlerelement (24a) besitzt, das sich nach rückwärts geneigt erstreckt, derart, daß es einen vorderen Bodenabschnitt und einen hinteren oberseitigen Abschnitt aufweist.

3. Motorrad nach Anspruch 2, **dadurch gekennzeichnet**, daß der Kühler (24) einen linken und rechten Wasserkasten (24b,24c) aufweist, die miteinander durch das Kühlerelement (24a) verbunden sind, das gekrümmt ist.

4. Motorrad nach zumindest einem der vorhergehenden Ansprüche 1 bis 3, **dadurch gekennzeichnet**, daß die Kühleranordnung aufweist einen oberen Kühler (24) und einen Boden-Kühler (21), die in Reihe angeordnet sind, wobei jeder von ihnen einen Wasserzuführungskasten (24b,61b) und einen Wasserabgabekasten (24c,61c) aufweist, verbunden mit der Einlaß- bzw. Auslaß-Seite jedes der Kühlerelemente (24b,16b), wobei der Wasserzuführungskasten (24c,61c) des Boden-Kühlers (62) mit dem Wasserabgabekasten (24c) des oberen Kühlers (24) verbunden ist.

5. Motorrad nach Anspruch 4, **dadurch gekennzeichnet**, daß der Wasserabgabekasten (24c,61c) mit einer Ansaugöffnung der Kühlmittelwasserpumpe (43) durch einen Rückführschlauch (42a) verbunden ist, während eine Bereitstellungsöffnung der Kühlmittelwasserpumpe (43) mit dem Kühlmittelmantel des Zylinderkörpers (26) des Motors verbunden ist, wobei der Kühlmittelmantel mit der Kühlmittelmantelanordnung des Zylinderkopfes (27) verbunden ist und daß ein Verbindungs-Wasserabgaberohr (41) vorgesehen ist, um die Wasserkühlmittelanordnung des Zylinderkopfes (27) mit dem Wasserzuführungskasten (24b) des Kühlers (24) durch ein Thermostatventil (42) und einen Rückführschlauch (43c) zu verbinden.

6. Motorrad nach Anspruch 3, **dadurch gekennzeichnet**, daß das Kühlerelement (24a) nach vorwärts konkav gekrümmt ist, wobei die Lenksäule (9) sich benachbart und quer vor dem Mittelabschnitt des Kühlerelementes (24a) erstreckt.

7. Motorrad nach zumindest einem der vorhergehenden Ansprüche 1 bis 6, **dadurch gekennzeichnet**, daß ein Paar linker und rechter Lüfterräder (63) hinter dem Kühler (24) angeordnet ist, wobei die Räder (63) nach unten und seitlich nach außen zu den linken und rechten unteren Eckabschnitten des Kühlers (24) versetzt angeordnet sind.

## Revendications

1. Motocyclette comprenant un arbre de direction (9) servant à diriger une roue avant (11) et un moteur à combustion interne, à refroidissement à eau, son agencement de refroidissement comprenant un ensemble formant radiateur (24) qui est disposé à un niveau sensiblement supérieur à celui de la roue avant (11), ledit ensemble formant radiateur (24) étant mis en communication avec un agencement de chemise d'agent refroidissant du moteur et comprenant un élément de radiateur (24a) s'étendant incliné vers l'arrière, sensiblement parallèlement à l'arbre de direction (9), caracte'risée en ce que l'élément de radiateur (24a) présente une partie centrale unique disposée derrière l'arbre de direction (9).

2. Motocyclette selon la revendication 1, caractérisée en ce que l'ensemble formant radiateur comprend au moins un radiateur (24) dont l'élément de radiateur (24a) s'étend incliné vers l'arrière, de manière à comprendre une partie inférieure avant et une partie supérieure arrière.

3. Motocyclette selon la revendication 2, caractérisée en ce que le radiateur (24) comprend des réservoirs à eau gauche et droit (24b, 24c) connectés entre eux par ledit élément de radiateur (24a), qui est incurvé.

4. Motocyclette selon au moins l'une des revendications 1 à 3 précédentes, caractérisée en ce que l'ensemble Formant radiateur comprend un radiateur supérieur (24) et un radiateur inférieur (61) décrits en série, ayant chacun un réservoir d'amenée d'eau (24b, 61b) et un réservoir d'évacuation d'eau (24c, 61c) connectés aux côtés d'entrée et de sortie de chacun des éléments de radiateur (24b, 61b), dans laquelle le réservoir d'amenée d'eau (24c, 61c) du radiateur inférieur (62) est connecté au réservoir d'évacuation d'eau (24c) du radiateur supérieur (24).

5. Motocyclette selon la revendication 4, caractérisée en ce que le réservoir d'évacuation d'eau (24c, 61c) est connecté à une ouverture d'aspiration de la pompe à eau de refroidissement (43), via un tuyau de retour (42a), tandis qu'une ouverture d'évacuation de la pompe à eau de refroidissement (43) est connectée à la chemise d'agent refroidissant du corps cylindrique (26) du moteur, ladite chemise de refroidissement étant mise en communication avec l'agencement de chemise de refroidissement de la culasse (27), et en ce qu'un tuyau d'évacuation d'eau de connecteur (41) est destiné à établir une communication entre l'agencement de refroidissement à l'eau de la culasse (27) et le réservoir d'amenée d'eau (24b) du radiateur (24), via une valve de thermostat (42) et un tuyau de retour (43c).

6. Motocyclette selon la revendication 3, caractérisée en ce que l'élément de radiateur (24a) est incurvé de manière concave vers l'avant, tandis que l'arbre de direction (9) s'étend de manière adjacente, transversalement à l'avant de la partie centrale de l'élément de radiateur (24a).

7. Motocyclette selon au moins l'une des revendications 1 à 6 précédentes, caractérisée en ce qu'un couple de ventilateurs gauche et droit (63) est disposé derrière le radiateur (24), lesdits ventilateurs (63) étant décalés vers le bas et latéralement par rapport aux parties d'angles inférieurs extérieurs, gauche et droit, du radiateur (24).
